# FASCICULE DE BREVET EUROPEEN

(11) **EP 1 779 000 B1**
(45) Date de publication et mention de la délivrance du brevet: **12.03.2008**
(21) Numéro de dépôt: 05793380.6
(22) Date de dépôt: 29.07.2005
(51) Int. Cl.: F16G 15/00

(54) **SYSTÈME D'ANCRAGE POUR INSTALLATION DE SURFACE ENTRAÎNÉE SELON DES MOUVEMENTS À FRÉQUENCE ÉLEVÉE**
VERANKERUNGSSYSTEM ZUM EINBAU IN EINE NACH HOCHFREQUENZBEWEGUNGEN BEWEGTE OBERFLÄCHE
ANCHORING SYSTEM FOR INSTALLING IN A SURFACE MOVED ACCORDING TO HIGH-FREQUENCY MOVEMENTS

(30) Priorité: 06.08.2004 FR 0408701
(43) Date de publication de la demande: 02.05.2007
(73) Titulaire: Technip France, 92400 Courbevoie (FR)
(72) Inventeur: MALOBERTI, René, Antoine, F-94500 Champigny sur Marne (FR)
(74) Mandataire: Bertrand, Didier
(86) Numéro de dépôt international: PCT/FR2005/001992
(87) Numéro de publication internationale: WO 2006/024763

(56) Documents cités:
- WO-A-00/78599
- FR-A- 2 267 487
- US-A- 2 679 818
- US-B1- 6 663 320
- PATENT ABSTRACTS OF JAPAN vol. 013, no. 380 (M-863), 23 août 1989 (1989-08-23) -& JP 01 132491 A (PENTA OCEAN CONSTR CO LTD), 24 mai 1989 (1989-05-24)
- PATENT ABSTRACTS OF JAPAN vol. 1998, no. 01, 30 janvier 1998 (1998-01-30) -& JP 09 240577 A (ZENIRAITO V:KK), 16 septembre 1997 (1997-09-16)

## Description

La présente invention se rapporte à un système d'ancrage pour une installation de surface entraînée selon des mouvements à fréquence élevée.

Une application envisagée est notamment celle des bouées marines de chargement permettant de transférer des hydrocarbures et qui sont adaptée à flotter à la surface de l'eau.

De telles bouées marines sont disposées au voisinage d'une plate-forme pétrolière qui elle-même est installée au droit d'un champ pétrolifère sous-marin. Les bouées marines sont alors raccordées à la plate-forme et l'hydrocarbure est transféré de la plate-forme vers les bouées et transbordé des bouées vers un navire de surface amarré sur la bouée.

Cette bouée marine de chargement est bien évidemment amarrée sur le fond marin grâce a au moins une ligne d'ancrage qui s'étend entre la bouée et le fond. Cette ligne d'ancrage comprend généralement une chaîne dont une extrémité est ancrée dans le fond marin et dont l'autre extrémité est accrochée à la bouée marine de chargement par l'intermédiaire d'un dispositif d'accrochage. Parfois, ces lignes d'ancrage sont mixtes, elles présentent une partie centrale constituée d'un câble et deux extrémités terminées par une chaîne.

Bien que la bouée marine de chargement soit amarrée généralement avec plusieurs lignes d'ancrage relativement tendues, elle est entraînée en mouvement par le vent, la houle et/ou les courants de surface de sorte que, de fortes contraintes de fatigue sont exercées sur ces lignes d'ancrage et en particulier sur les maillons des chaînes. En effet, contrairement à un navire ou à une plate-forme qui est relativement stable par rapport à ces mouvements de surface compte tenu de leur inertie, une bouée marine de chargement, plus légère est elle, perpétuellement entraînée en mouvement à des fréquences élevées, par rapport aux lignes d'ancrage qui la retiennent. De tels systèmes d'ancrage sont connus des documents JP 01 13 2491, JP 09 24 0577 et US 26 79 818.

Ainsi, pour accrocher la chaîne à l'installation marine, les lignes d'ancrage comprennent habituellement, un dispositif d'accrochage articulé selon deux axes d'articulation. Ce dispositif d'accrochage comporte au moins deux brides montées articulées l'une sur l'autre, l'une des brides étant montée à rotation dans une chape qui elle est solidaire de l'installation marine, l'autre bride étant solidaire de la chaîne.

En effet, les frictions qui apparaissent dans les articulations créent un moment résistant qui est proportionnel aux coefficients de friction, à la tension de la chaîne et au diamètre de l'axe d'articulation. Pour que le pivotement ait lieu il est nécessaire de vaincre ce moment résistant par un moment crée par l'angle de déviation de l'extrémité de la chaîne par rapport à l'extrémité de la bride. Bien que les maillons des chaînes soient susceptibles de pivoter les uns par rapport aux autres, il s'avère que la chaîne devient presque rigide compte tenu des niveaux de tensions élevés ; et ce moment ne peut naître que de la flexion des maillons. Bien que les angles de déviation soient inférieurs à 1°, cette flexion provoque néanmoins une fatigue de la chaîne susceptible d'altérer sa durée de vie.

Au-delà de cet angle, le moment est suffisant pour faire pivoter le dispositif d'accrochage.

Un problème qui se pose et que vise à résoudre la présente invention, est alors de fournir un système d'ancrage pour lequel les mouvements de ladite installation marine provoqués par la surface, n'entraînent pas la fatigue prématurée des maillons des chaînes et la rupture de ces dernières.

Dans ce but, la présente invention propose un système d'ancrage pour une installation marine de surface entraînée en mouvements selon une fréquence élevée par rapport au fond marin, selon la revendication 1.

Ainsi, une caractéristique de l'invention réside dans la mise en oeuvre d'un organe longitudinal déformable, entre la chaîne et l'installation marine, de telle manière que, durant les mouvements de l'installation, cet organe longitudinal déformable puisse effectivement se déformer à la place des maillons de la chaîne et de ce fait, avoir un niveau de fatigue de maillon de chaîne négligeable.

Ce ne sont plus les maillons de la chaîne qui se déforment, et qui finissent par se briser, mais c'est l'organe longitudinal déformable, spécialement conçu à cet effet, qui subit les déformations et les absorbe jusqu'à ce que l'angle de déviation soit suffisant pour que le moment puisse compenser ledit moment résistant. De la sorte, la durée de service de ces lignes d'ancrage est allongée.

L'organe longitudinal déformable est avantageusement monté entre la bride précitée et la chaîne. Le montage d'une bride, formée d'une biellette de grande longueur pourrait éventuellement permettre de diminuer les déviations de chaîne nécessaires, compte tenu de l'augmentation du bras de levier. En revanche, l'augmentation de cette longueur présente des limites au regard des comportements dynamique de l'ensemble et les dimensions d'une telle biellette seraient trop importantes pour pouvoir manipuler et installer l'installation marine par les moyens d'installation conventionnels.

Avantageusement, lesdites première et seconde extrémités sont respectivement montées articulées sur ladite installation marine et sur ladite chaîne. De la sorte, l'ensemble installation marine, organe longitudinal déformable et chaîne retrouve plus rapidement son état d'équilibre et de moindre contrainte, ce qui diminue considérablement l'usure.

Selon l'invention, ledit organe longitudinal présente au moins une portion apte à se déformer en fléchissant selon un premier plan et au moins une autre portion apte à se déformer en fléchissant selon un second plan sensiblement perpendiculaire audit premier plan. Ainsi, les deux portions qui sont susceptibles de fléchir indépendamment l'une de l'autre, autorisent la flexion, ou déviation, de l'organe longitudinal dans toutes les directions possibles. De la sorte, quels que soient les déplacements relatifs de l'installation marine et de la chaîne sous tension, l'organe longitudinal absorbe ces déplacements.

Selon l'invention, lesdites portions sont formées par deux pièces montées pivotantes l'une par rapport à l'autre. De la sorte l'organe longitudinal est d'un montage plus aisé.

Selon un deuxième mode de réalisation de l'invention, ledit organe longitudinal présente trois portions, une portion solidaire de ladite bouée marine de transfert, une portion solidaire de ladite chaîne et une troisième portion intermédiaire qui relie les deux autres portions. Ainsi, grâce à cette troisième portion intermédiaire non seulement on augmente l'amplitude de fléchissement en augmentant sensiblement la longueur de l'organe longitudinal déformable mais aussi on privilégie une troisième direction de courbure selon un troisième plan. Toutefois, cette troisième portion peut être montée de façon à infléchir selon un troisième plan sensiblement parallèle à l'un des deux autres plans privilégiés.

Préférentiellement, ledit organe longitudinal déformable présente une section droite rectangulaire de manière à lui conférer une direction privilégiée de fléchissement, selon un plan perpendiculaire à son côté de plus grande largeur. Lorsque l'organe longitudinal déformable comporte plusieurs portions, chacune desdites portions présente alors une section droite rectangulaire.

Selon une variante de réalisation de l'invention la section droite de l'organe longitudinal déformable est décroissante de ladite première extrémité vers ladite seconde extrémité de telle sorte que parallèlement son moment d'inertie de section droite décroît également. De cette façon, lorsque l'organe longitudinal déformable fléchit, son rayon de courbure est sensiblement constant de la première extrémité, solidaire de l'installation marine, vers la seconde extrémité solidaire de la chaîne. En conséquence, l'organe longitudinal déformable autorise une répartition plus uniforme des contraintes qui s'exercent sur lui.

Avantageusement, le moment d'inertie de section droite dudit organe longitudinal déformable est inférieur au moment d'inertie moyen d'un maillon de chaîne et par exemple, inférieur à 10.10⁻⁶ m⁴. Ce moment d'inertie de section droite est à comparer par exemple avec le moment d'inertie de 12.10⁻⁶ m⁴ des branches d'un maillon de chaîne, long d'environ 0,5 m, le diamètre des branches étant voisin de 0,125 m.

Le moment d'inertie dudit organe longitudinalement déformable est par exemple de 7,2.10⁻⁶ m⁴, soit environ le moment d'inertie de section droite d'un organe longitudinal de section rectangulaire de 60 mm X 400 mm réalisé en acier. Toutefois, la plus grande largeur de l'organe longitudinal en section droite peut être comprise entre 400 mm et 800 mm tandis que son épaisseur peut être comprise entre 50 mm et 100 mm. Par ailleurs, tout alliage, par exemple à base de titane, peut être utilisé à place de l'acier.

Par ailleurs, selon un autre objet l'invention concerne une bouée marine de chargement équipée d'un système d'ancrage tel que décrit ci-dessus, ledit système d'ancrage comprenant une pluralité de lignes d'ancrage de façon à limiter les excursions de la bouée marine de chargement.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1A est une vue schématique partielle en coupe longitudinale d'une ligne d'ancrage;
- la Figure 1B est une vue schématique en coupe longitudinale de l'objet illustré sur la Figure 1A selon un angle de vue décalé de 90° dans un plan perpendiculaire à ladite ligne ancrage ;
- la Figure 2A est une vue schématique partielle en coupe longitudinale d'une ligne d'ancrage conforme à l'invention selon un premier mode de mise en oeuvre ;
- la Figure 2B est une vue schématique en coupe longitudinale de l'objet d'illustrer sur la Figure 2A selon un angle de vue décalée de 90° ;
- la Figure 3A est une vue schématique partielle en coupe longitudinale d'une ligne d'ancrage selon un deuxième mode de mise en oeuvre ;
- la Figure 3B est une vue schématique en coupe longitudinale de l'objet d'illustrer sur la Figure 3A selon un angle de vue décalé de 90° ;
- la Figure 4A est une vue schématique partielle en coupe longitudinale d'une ligne d'ancrage selon un troisième mode de mise en oeuvre ;
- la Figure 4B est une vue schématique en coupe longitudinale de l'objet d'illustrer sur la Figure 4A selon un angle de vue décalé de 90° ;
- la Figure 5A est une vue schématique partielle en coupe longitudinale d'une ligne d'ancrage selon un quatrième mode de mise en oeuvre; et,
- la Figure 5B est une vue schématique en coupe longitudinale de l'objet d'illustrer sur la Figure 5A selon un angle de vue décalé de 90°.

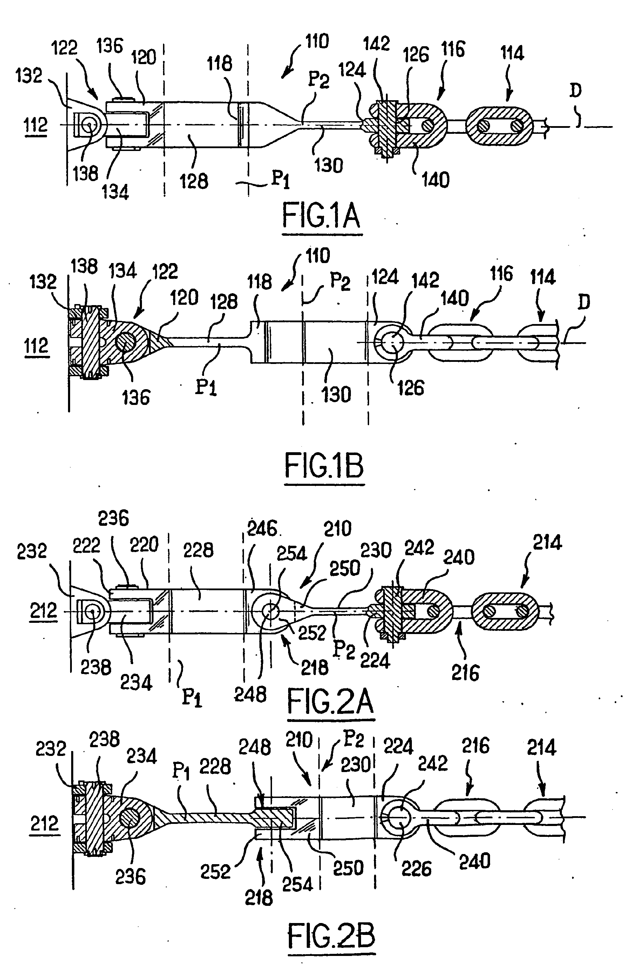

Les figures 1A et 1B illustrent un dispositif d'accrochage 110 qui relie, par exemple, selon une direction longitudinale moyenne D, une bouée marine de chargement 112 et une chaîne 114 dont seule une extrémité 116 située au voisinage de la surface de l'eau est ici représentée. L'autre extrémité de la chaîne 114 est ancrée dans le fond marin. Sur la Figure 1A, le dispositif d'accrochage 110 est orienté perpendiculairement à la paroi de la bouée marine de chargement 112 pour simplifier le dessin. Toutefois, en situation réelle cette paroi est disposée sensiblement verticalement et le dispositif d'accrochage 110 est incliné vers le bas en direction du fond marin.

Le dispositif d'accrochage 110 comprend un organe longitudinal déformable 118 qui présente deux extrémités opposées, une première extrémité 120 se terminant par une première chape 122 et une seconde extrémité 124 dans laquelle est pratiqué un perçage transversal 126. Cet organe longitudinal déformable 118 présente deux portions de section droite rectangulaire sensiblement identiques, une première portion 128 se terminant par la première extrémité 120 et une seconde portion 130 se terminant par la seconde extrémité 124 ; les deux portions 128, 130 qui définissent respectivement deux plans, P1 et P2, sont torsadées l'une par rapport à l'autre selon la direction longitudinale D de façon que les plans qu'elles définissent soient sensiblement perpendiculaires entre eux.

En outre, le dispositif d'accrochages 110 comprend, du côté de la première extrémité 120, une seconde chape 132 solidaire de la bouée marine de chargement 112 et une bride de liaison 134 présentant deux extrémités dans laquelle sont respectivement ménagés deux orifices perpendiculaires entre eux ; l'une des extrémités étant montée articulée dans la première chape 122 au moyen d'un premier axe 136, l'autre extrémité étant elle, montée articulée dans la seconde chape 132 au moyen d'un deuxième axe 138. Du côté de la seconde extrémité 124, le dispositif d'accrochage 110 comprend un étrier 140 crocheté dans le dernier maillon de l'extrémité 116 de la chaîne 114 et dont les deux extrémités libres sont réunies par un troisième axe 142 qui traverse également le perçage transversal 126 de la seconde extrémité 124.

L'organe longitudinal déformable 118, présente des portions de section droite rectangulaires par exemple, de 0,06 m d'épaisseur par 0,4 m de largeur, ce qui correspond à un moment d'inertie de section droite voisin de 7,2.10⁻⁶ m⁴ et qui permet un fléchissement de ces portions dans les conditions de mise en oeuvre décrites ci-dessous.

Lorsque la chaîne 114 est en tension, les forces de traction sont si intenses que tous les éléments du dispositif d'accrochage 110 forment un ensemble rigide et le moindre mouvement de la bouée marine de chargement 112 ne va, non pas entraîner la déformation de la chaîne 114 dont le moment d'inertie de section droite global est au moins supérieur de deux tiers à celui de l'organe longitudinal déformable, ni même le pivotement de la bride de liaison 134 autour des axes, mais la déformation de l'organe longitudinal déformable 18, dans l'une et/ou l'autre de ses portions 128, 130. Car en effet, compte tenu des différences de moment d'inertie, la résistance à la déformation de la chaîne est supérieure à la résistance à la déformation de l'organe longitudinal déformable 18. En effet, dans la situation telle que représentée sur la Figure 1A, lorsque le la bouée marine de chargement 112 est par exemple entraînée en basculement dans une direction opposée à la chaîne 114, seule la seconde portion 130 de l'organe longitudinal déformable 118 est amenée à réfléchir suivant son épaisseur selon un plan perpendiculaire au plan P2 qu'elle définit, la première portion 128 travaillant alors suivant sa largeur selon son plan P1 et ne se déformant pas.

En revanche, si la bouée marine de chargement 112 est non pas entraînée en basculement, mais dans une direction perpendiculaire en rotation sur elle même par exemple, ce n'est plus la seconde portion 130 de l'organe longitudinal déformable 118 qui est amené à réfléchir mais la première portion 128 qui travaille alors suivant son épaisseur selon un plan perpendiculaire au plan P1 qu'elle définit. Toutefois, les mouvements de la bouée marine de chargement 112 s'effectuent rarement uniquement selon le plan P1 ou selon le plan P2 mais généralement entre les deux, de sorte que les deux portions 128, 130 de l'organe longitudinal déformable 118 fléchissent simultanément sans que la chaîne 114 elle, ne se déforme, ce qui évite le vieillissement prématuré de ses maillons en fatigue.

On se référera maintenant aux figures 2A et 2B qui illustrent selon un premier mode de mise en oeuvre un dispositif d'accrochage 210 conforme à l'invention. On retrouve de façon analogue sur ces Figures le dispositif d'accrochage 210 qui relie une bouée marine de chargement 212 et une chaîne 214.

Seul en diffère l'organe longitudinal déformable 218 qui est non plus former d'une seule pièce torsadée mais de deux pièces distinctes, articulées l'une par rapport à l'autre. Une première pièce 228 dont une première extrémité 220 se termine tout comme dans le mode de mise en oeuvre précédent par une chape 222 et une seconde pièce 230 présentant une seconde extrémité 224 dans laquelle est pratiqué un perçage transversal 226. Les première 220 et seconde 224 extrémités respectivement des première 228 et seconde 230 pièces sont raccordées respectivement à la bouée marine de chargement 212 et à la chaîne 214 par des moyens identiques à ceux qui ont été décrits en regard des Figures 1A et 1B, et ils ne sont pas décrits à nouveau ici.

En revanche, la première pièce 228 présente une seconde extrémité 246 dans laquelle est ménagé un perçage 248 tandis que la seconde pièce 230 présente une première extrémité 250 qui se termine par une troisième chape 252 adaptée à recevoir la seconde extrémité 246. Ainsi, seconde extrémité 246 et première extrémité 250 sont reliées entre elles par l'intermédiaire d'un quatrième axe 254 qui s'étend dans la troisième chape 252 et à travers le perçage 248.

Par ailleurs, tout comme dans les figures 1A et 1B les pièces 228, 230 qui sont respectivement les homologues des portions 128 et 130, présentent une même section droite et elles sont ajustées de façon que les plans qu'elles définissent P1 et P2 soient orientés perpendiculairement entre eux.

Ainsi, lorsque la chaîne 214 est en tension, l'ensemble des éléments du dispositif d'accrochage 210 forment un ensemble rigide, malgré l'articulation des deux pièces 228, 230, et tout comme dans les figures 1A et 1B, les pièces 228 et 230 fléchissent le plus souvent simultanément lors des mouvements de la bouée marine de chargement 212. En revanche, si un relâchement de la chaîne a lieu, par exemple si la hauteur d'eau entre la surface le fond marin diminue, alors les première 228 et seconde 230 pièces sont susceptibles de pivoter non seulement l'une par rapport à l'autre mais aussi respectivement par rapport à la bouée marine de chargement 212 et par rapport à la chaîne 214 ce qui permet de relâcher les tensions.

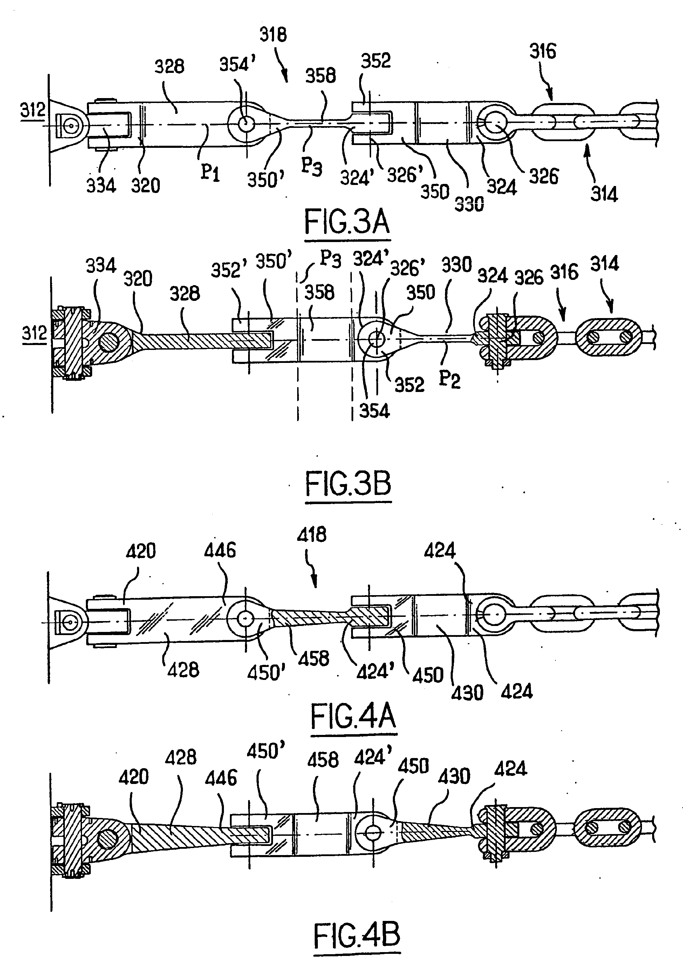

On se réservera maintenant aux figures 3A et 3B illustrant un dispositif d'accrochage 310 conforme à un deuxième mode de mise en oeuvre. Ce dispositif d'accrochage 310 relie toujours une bouée marine de chargement 312 et une chaîne 314 et il présente, tout comme dans le mode de mise en oeuvre précédent, un organe longitudinal déformable 318 lequel comprend une première pièce 328 et une seconde pièce 330, non pas montées articulées ensemble mais reliées par une pièce intermédiaire 358. Cette pièce intermédiaire 358 est identique à la seconde pièce 330 qui est elle, reliée à l'extrémité de la chaîne 316 de façon identique à celle des figures 1 et 2.

Outre l'ajout d'une pièce intermédiaire 358, la première pièce 328 présente une épaisseur qui est sensiblement double de celle de la première pièce 228 du mode de mise en oeuvre précédemment décrit au droit des Figures 2A et 2B, et qui correspond à un bras ou à une biellette. On en expliquera les détails de fonctionnement ci-après.

Cependant, cette pièce intermédiaire 358 est également de section rectangulaire et elle présente les mêmes dimensions que la seconde pièce 330. Elle présente également une troisième chape 352' à sa première extrémité 350' et une seconde extrémité 324' dans laquelle est pratiqué un perçage transversal 326'. En outre, on retrouve sur la seconde pièce 330 une première extrémité 350 terminée par une troisième chape 352 et une seconde extrémité 324 dans laquelle est pratiqué un perçage transversal 326.

Ainsi, la première pièce 328 est montée articulée sur une bride de liaison 334 de manière analogue aux modes de mise en oeuvre précédents. Cette première pièce 328 présente une épaisseur, par exemple égale à 0,15 m tandis que la largeur, voisine de 0,4m reste inchangée. La pièce intermédiaire 358 qui définit un plan P3 est montée articulée sur la première pièce 328 grâce à un quatrième axe 354' de façon que le plan P1 soit sensiblement perpendiculaire au plan P3 et, la seconde pièce 330 est montée articulée à la seconde extrémité 324' de cette pièce intermédiaire 358 grâce au quatrième axe 354 qui traverse à la fois la troisième chape 352 et le perçage transversal 326' de la seconde extrémité 324' de la pièce intermédiaire 358. De la sorte, la première pièce 328 et la secondes pièce 330 sont sensiblement coplanaires.

Ainsi, la section droite des pièces décroît entre la première pièce 328 et la pièce intermédiaire 358, de sorte que cette dernière et a fortiori la seconde pièce 330, fléchirons avec une plus grande amplitude que la première pièce 328 qui elle fléchie très peu. De la sorte, globalement l'organe longitudinal déformable 318 présentera un rayon de courbure plus faible vers la seconde extrémité 324 tandis qu'au voisinage de la bouée marine de chargement 312 il sera plus grand. Ainsi donc, l'organe longitudinal déformable 318 et en particulier la seconde pièce 330 et la pièce intermédiaire 358 seront susceptibles de fléchir et de jouer pleinement leur rôle pour éviter que la chaîne 314 elle, ne se déforme.

On se référera à présent aux Figures 4A et 4B illustrant un troisième mode de mise en oeuvre permettant d'obtenir le fléchissement d'un organe longitudinal déformable 418 dont le rayon de courbure diminue de façon sensiblement continue entre une première extrémité 420 et une seconde extrémité 424.

Tout comme dans le mode précédent de mise en oeuvre, l'organe longitudinal déformable 418 comprend une pièce intermédiaire 458 similaire à une seconde pièce 430, les deux montées articulées l'une sur l'autre de la même façon. En revanche, leur section rectangulaire n'est plus constante mais variable, en diminuant d'une première extrémité 450', 450 vers une seconde extrémité 424', 424 respectivement pour la pièce intermédiaire 458 et pour la seconde pièce 430.

En outre, une première pièce 428 présente également une section décroissante de la première extrémité 420 vers une seconde extrémité 446. En revanche, tout comme dans le deuxième mode de mise en oeuvre, cette première pièce 428 présente en proportion une section sensiblement double de celle des pièces intermédiaires 458 et seconde pièce 430. Ainsi, grâce à ce dernier mode de mise en oeuvre, chacune des pièces est adaptée à fléchir selon un plan perpendiculaire à celui qu'elles définissent respectivement, mais avec un rayon de courbure qui diminue de l'extrémité de plus grande épaisseur vers l'extrémité de plus faible épaisseur et ce, de manière sensiblement continue le long de la pièce considérée. De la sorte en atténuant les discontinuités de fléchissement de l'organe longitudinal déformable, on répartit de façon sensiblement uniforme les efforts qu'il est amené à supporter et on prolonge ainsi sa durée de service potentielle.

Selon ce mode de mise en oeuvre, les sections des pièces articulées les unes par rapport aux autres sont toujours rectangulaires. Toutefois, selon un autre mode de mise en oeuvre non représenté, on prévoit d'utiliser des pièces de sections circulaires afin de ne privilégier aucun plan particulier de fléchissement.

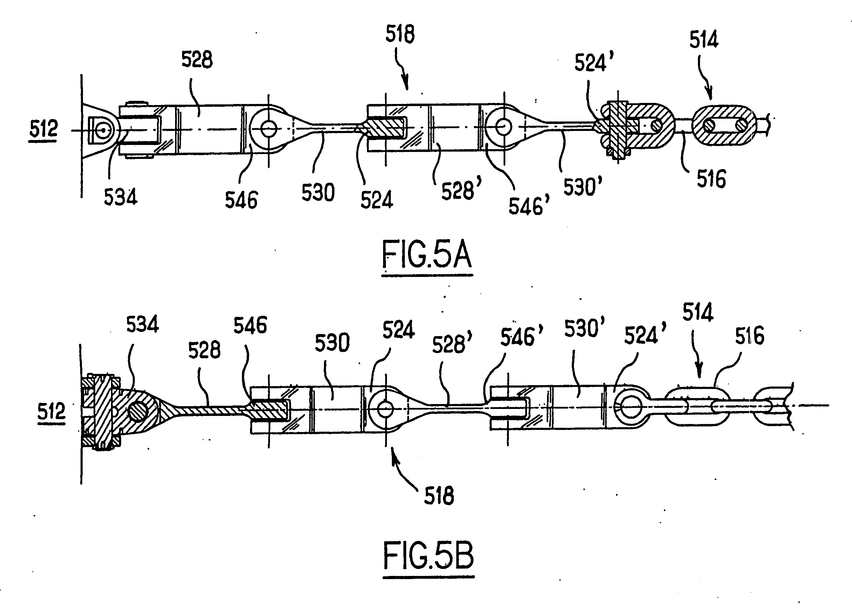

Enfin, selon un quatrième mode de mise en oeuvre de l'invention, illustré sur les Figures 5A et 5B, un organe longitudinal déformable 518 est constitué de deux organes longitudinaux déformables 218, tel qu'illustré sur les Figures 2A et 2B, montés bout à bout et de façon à relier une bouée marine de chargement 512 et une chaîne 514.

Ainsi, on retrouve sur ces figures, une première première pièce 528 montée articulée sur une bride de liaison 534 et une première seconde pièce 530 elle-même montée articulée sur une seconde extrémité 546 de la première première pièce 528. Une seconde première pièce 528' est à son tour montée articulée sur une seconde extrémité 524 de la première seconde pièce 530 tandis qu'une seconde seconde pièce 530' est montée elle, articulée sur une seconde extrémité 546' de la seconde première pièce 528'. Cette seconde seconde pièce 530' présente une seconde extrémité 524' qui elle est raccordée à l'extrémité 516 de la chaîne 514.

Ainsi, cet organe longitudinal déformable 518 présente quatre pièces sensiblement identiques, successivement montées articulées l'une sur l'autre et alternativement selon des plans perpendiculaires. De la sorte, l'organe longitudinal déformable 518 présente une longueur double par rapport à l'organe longitudinal déformable 218 illustré aux Figures 2A et 2B, et il permet alors d'autoriser un fléchissement qui est au moins du double pour une contrainte subie sensiblement équivalente.

Selon encore un autre mode de mise en oeuvre de l'invention, non représenté, l'organe longitudinal déformable équipe un dispositif d'accrochage réglable. Ce dispositif présente, un premier organe tubulaire orienté sensiblement verticalement et solidaire de l'installation marine, et un second organe tubulaire monté articulé dans la partie inférieure dudit premier. La chaîne est susceptible d'être guidée en translation dans lesdits organes tubulaires, et l'extrémité inférieure du second organe tubulaire présente des moyens de blocage de la chaîne. Lorsque la chaîne est bloquée en translation dans les organes tubulaires, les mouvements de l'installation marine sont susceptibles de provoquer également la déformation de la chaîne. Afin d'y remédier, on prévoit d'équiper le premier organe tubulaire, d'un organe longitudinal déformable à la place du second organe, dont seront solidaires lesdits moyens de blocages de la chaîne. De la sorte, l'organe longitudinal déformable est susceptible d'absorber les contraintes qui s'exercent sur la chaîne lorsque l'installation marine est entraînée en mouvement.

## Revendications

1. Système d'ancrage pour une installation marine de surface susceptible d'être entraînée en mouvement selon une fréquence élevée par rapport au fond marin, ledit système d'ancrage comprenant une ligne d'ancrage qui s'étend entre ladite installation marine et ledit fond marin pour amarrer ladite installation marine sur le fond marin, ladite ligne - d'ancrage autorisant les mouvements de ladite installation marine autour d'une position d'équilibre, ladite ligne d'ancrage comprenant une chaîne (114, 214, 314, 414, 514) et un dispositif d'accrochage (110, 210, 310, 410, 510) pour accrocher ladite chaîne à ladite installation marine,
ledit dispositif d'accrochage comprenant un organe longitudinal déformable (118, 218, 318, 418, 518) qui présente deux extrémités opposées, une première extrémité (120, 220, 320, 420, 520) solidaire de ladite installation marine et une seconde extrémité (124, 224, 324, 424, 524) solidaire de ladite chaîne,
ledit organe longitudinal déformable présentant au moins une portion (128, 228) apte à se déformer en fléchissant selon un premier plan et au moins une autre portion (130, 230) apte à se déformer en fléchissant selon un second plan sensiblement perpendiculaire audit premier plan, lors des mouvements de ladite installation marine.
**caractérisé en ce que** lesdites première (120, 220, 320, 420, 520) et seconde (124, 224, 324, 424, 524) extrémités sont respectivement montées articulées sur ladite installation marine et sur ladite chaîne
et **en ce que** lesdites portions sont formées par deux pièces (228, 230) montées pivotantes l'une par rapport à l'autre.

2. Système d'ancrage selon la revendication 1 **caractérisé en ce que** ledit organe longitudinal déformable présente trois portions, une portion (328, 428) solidaire de ladite installation marine (312, 412), une portion (330, 530) solidaire de ladite chaîne et une troisième portion intermédiaire (358, 458) qui relie les deux autres portions.

3. Système d'ancrage selon la revendication 1 ou 2 **caractérisé en ce que** ledit organe longitudinal déformable présente une section droite rectangulaire.

4. Système d'ancrage selon l'une quelconque des revendications 1 à 3, **caractérisé en ce que** ledit organe longitudinal déformable (318, 418) présente une section décroissante, de ladite première extrémité (320, 420) vers ladite seconde extrémité (324, 424).

5. Système d'ancrage selon l'une quelconque des revendications 1 à 4, **caractérisé en ce que** le moment d'inertie de section droite dudit organe longitudinal déformable (118, 218, 318, 418, 518) est inférieur au moment d'inertie moyen de section droite d'un maillon de ladite chaîne.

6. Système d'ancrage selon l'une quelconque des revendications 1 à 5, **caractérisé en ce que** ledit organe longitudinal déformable (118, 218, 318, 418, 518) est réalisé en acier.

7. Bouée marine de chargement équipée d'un système d'ancrage selon l'une quelconque des revendications 1 à 6, **caractérisée en ce que** ledit système d'ancrage comprend une pluralité de lignes d'ancrage.

## Claims

1. Anchoring system for a surface marine installation able to be set in motion in accordance with a high frequency in relation to the sea bed, said anchoring system including an anchoring line which extends between said marine installation and said sea bed in order to fasten said marine installation onto the sea bed, said anchoring line allowing the movements of said marine installation around a balance position, said anchoring line including a chain (114, 214, 314, 414, 514) and an attachment device (110, 210, 310, 410, 510) for attaching said chain to said marine installation,
said attachment device including a deformable longitudinal body (118, 218, 318, 418, 518) which has two opposite ends, a first end (120, 220, 320, 420, 520) which forms one piece with said marine installation and a second end (124, 224, 324, 424, 524) which forms one piece with said chain,
said deformable longitudinal body having at least one portion (128, 228) able to deform by bending in accordance with a first plane and at least one other portion (130, 230) able to deform by bending in accordance with a second plane which is substantially perpendicular to said first plane, during movements of said marine installation,
**characterised in that** said first (120, 220, 320, 420, 520) and second (124, 224, 324, 424, 524) ends are respectively mounted in an articulated manner on said marine installation and on said chain,
and **in that** said portions are formed by two parts (228, 230) mounted in a pivoting manner in respect of one another.

2. The anchoring system according to claim 1, **characterised in that** said deformable longitudinal body has three portions, one portion (328, 428) forming one piece with said marine installation (312, 412), one portion (330, 530) forming one piece with said chain and a third intermediate portion (358, 458) ' which links the two other portions.

3. The anchoring system according to claim 1 or 2, **characterised in that** said deformable longitudinal body has a vertical rectangular cross-section.

4. The anchoring system according to any one of claims 1 to 3, **characterised in that** said deformable longitudinal body (318, 418) has a cross-section which becomes smaller going from said first end (320, 420) to said second end (324, 424).

5. The anchoring system according to any of claims 1 to 4, **characterised in that** the moment of inertia of the vertical section of said deformable longitudinal body (118, 218, 318, 418, 518) is lower than the moment of inertia of the vertical section of a link of said chain.

6. The anchoring system according to any of claims 1 to 5, **characterised in that** said deformable longitudinal body (118, 218, 318, 418, 518) is made of steel.

7. A marine loading buoy equipped with an anchoring system according to any of claims 1 to 6, **characterised in that** said anchoring system includes a plurality of anchoring lines.

## Patentansprüche

1. Verankerungssystem für eine Einrichtung an der Meeresoberfläche, welche mit einer erhöhten Frequenz bezüglich des Meeresbodens bewegbar ist, wobei das Verankerungssystem eine Verankerungsleine aufweist, die sich zwischen der Einrichtung und dem Meeresboden erstreckt, um die Einrichtung an dem Meeresboden zu verankern, wobei die Verankerungsleine die Bewegungen der Einrichtung um eine Gleichgewichtslage herum gestattet, wobei die Verankerungsleine eine Kette (114, 214, 314, 414, 514) und eine Kopplungseinrichtung (110, 210, 310, 410, 510) enthält, um die Kette an der Einrichtung anzukoppeln, wobei die Kopplungseinrichtung ein längliches, verformbares Organ (118, 218, 318, 418, 518) aufweist, das mit zwei entgegengesetzten Enden versehen ist, wobei ein erstes Ende (120, 220, 320, 420, 520) mit der Einrichtung und ein zweites Ende (124, 224, 324, 424, 524) mit der Kette gekoppelt ist, wobei das längliche, verformbare Organ zumindest einen Abschnitt (128, 228), der eingerichtet ist, sich zu verformen, indem er sich in einer ersten Ebene verbiegt, und zumindest einen anderen Abschnitt aufweist, der eingerichtet ist, sich zu verformen, indem er sich in einer zweiten Ebene durchbiegt, die im Wesentlichen senkrecht zu der ersten Ebene ausgerichtet ist, und zwar bei den Bewegungen der Einrichtung,
**dadurch gekennzeichnet,**
**dass** das erste Ende (120, 220, 320, 420, 520) und das zweite Ende (124, 224, 324, 424, 524) an der Einrichtung bzw. an der Kette gelenkig befestigt ist, und
**dass** die Abschnitte von zwei Teilen (228, 230) gebildet sind, welche relativ zueinander schwenkbar angebracht sind.

2. Verankerungssystem nach Anspruch 1, **dadurch gekennzeichnet, dass** das längliche, verformbare Organ drei Abschnitte aufweist, wobei ein Abschnitt (328,428) mit der Einrichtung (312, 412) verbunden ist, ein Abschnitt (330, 530) mit der Kette verbunden ist und ein dritter, dazwischen liegender Abschnitt (358, 458) die beiden anderen Abschnitte verbindet.

3. Verankerungssystem nach Anspruch 1 oder 2, **dadurch gekennzeichnet, dass** das längliche, verformbare Organ einen rechteckigen Abschnitt aufweist.

4. Verankerungssystem nach einem der Ansprüche 1 bis 3, **dadurch gekennzeichnet, dass** das längliche, verformbare Organ (318, 418) einen Querschnitt aufweist, welcher von dem ersten Ende (320, 420) zu dem zweiten Ende (324, 424) hin abnimmt.

5. Verankerungssystem nach einem der Ansprüche 1 bis 4, **dadurch gekennzeichnet, dass** das Trägheitsmoment des Querschnittes des länglichen, verformbaren Organs (118, 218, 318, 418, 518) kleiner ist als das mittlere Trägheitsmoment des Querschnitts eines Glieds der Kette.

6. Verankerungssystem nach einem der Ansprüche 1 bis 5, **dadurch gekennzeichnet, dass** das längliche, verformbare Organ (118, 218, 318, 418, 518) aus Stahl hergestellt ist.

7. Offshore-Ladeboje mit einem Verankerungssystem nach einem der Ansprüche 1 bis 6, **dadurch gekennzeichnet, dass** das Verankerungssystem eine Vielzahl von Verankerungsleinen aufweist.
